(19) Europäisches Patentamt

European Patent Office

Office européen des brevets

(11) **EP 1 226 461 B1**

(12) **EUROPEAN PATENT SPECIFICATION**

(45) Date of publication and mention
of the grant of the patent:
**11.01.2006 Bulletin 2006/02**

(51) Int Cl.:
*G02B 6/34* (2006.01)      *G02B 6/293* (2006.01)

(21) Application number: **00973004.5**

(22) Date of filing: **01.11.2000**

(86) International application number:
**PCT/GB2000/004192**

(87) International publication number:
**WO 2001/033270 (10.05.2001 Gazette 2001/19)**

(54) **PHASAR WITH FLATTENED PASS-BAND**

PHASAR MIT FLACHER DURCHLASSKURVE

PHASAR A BANDES PASSANTES APLATIES

(84) Designated Contracting States:
**AT BE CH CY DE DK ES FI FR GB GR IE IT LI LU MC NL PT SE TR**

(30) Priority: **01.11.1999 US 430836**

(43) Date of publication of application:
**31.07.2002 Bulletin 2002/31**

(73) Proprietor: **Gemfire Europe Limited**
**Livingston EH54 8SF (GB)**

(72) Inventors:
• **BULTHUIS, Hindrick, Freerk**
**NL-7512 DK Enschede (NL)**
• **AMERSFOORT, Martin, Ronald**
**NL-7546 CB Enschede (NL)**
• **LAMING, Richard, Ian**
**Edinburgh EH10 6JL (GB)**
• **VOLANTHEN, Mark**
**Edinburgh EH11 1AH (GB)**
• **VAN DER VLIET, Frederik, Marcel**
**NL-7531 CP Enschede (NL)**

(74) Representative: **Mills, Julia et al**
**D Young & Co**
**120 Holborn**
**London EC1N 2DY (GB)**

(56) References cited:
EP-A- 0 702 253       EP-A- 0 721 120
EP-A- 0 881 512       EP-A- 0 933 664
US-A- 5 002 350       US-A- 5 706 377
US-A- 5 748 811       US-A- 5 926 298

• OKAMOTO K ET AL: "EIGHT-CHANNEL FLAT SPECTRAL RESPONSE ARRAYED-WAVEGUIDE MULTIPLEXER WITH ASYMMETRICAL MACH-ZEHNDER FILTERS" IEEE PHOTONICS TECHNOLOGY LETTERS,US,IEEE INC. NEW YORK, vol. 8, no. 3, 1 March 1996 (1996-03-01), pages 373-374, XP000582825 ISSN: 1041-1135
• DRAGONE C: "EFFICIENT TECHNIQUES FOR WIDENING THE PASSBAND OF A WAVELENGTH ROUTER" JOURNAL OF LIGHTWAVE TECHNOLOGY,US,IEEE. NEW YORK, vol. 16, no. 10, 1 October 1998 (1998-10-01), pages 1895-1906, XP000793328 ISSN: 0733-8724
• SMIT M.K.; VAN DAM C.: 'PHASAR-BASED WDM-DEVICES : PRINCIPLES, DESIGN AND APPLICATIONS' IEEE JOURNAL OF SELECTED TOPICS IN QUANTUM ELECTRONICS vol. 2, no. 2, June 1996, IEEE SERVICE CENTER, US, pages 236 - 250, XP000685236

**Description**

FIELD OF THE INVENTION

The invention relates to phasars, arrayed waveguide gratings and optical communications networks.

BACKGROUND ART

Optical wavelength-division multiplexing (WDM) elements are becoming increasingly important in advanced optical communications networks incorporating optical fibre transmission paths. Silica optical fibre has a transmission bandwidth of over 300 terahertz. Such an extremely large bandwidth is, however, limited by the electronics on the transmitting and receiving ends. Such electronic transmitters and receivers, typically bases on silicon electronics, are limited commercially at the present time to 2 to 10 gigabits/s (Gbs). Further increases to 40Gbs are contemplated, but further increases will be difficult to achieved.

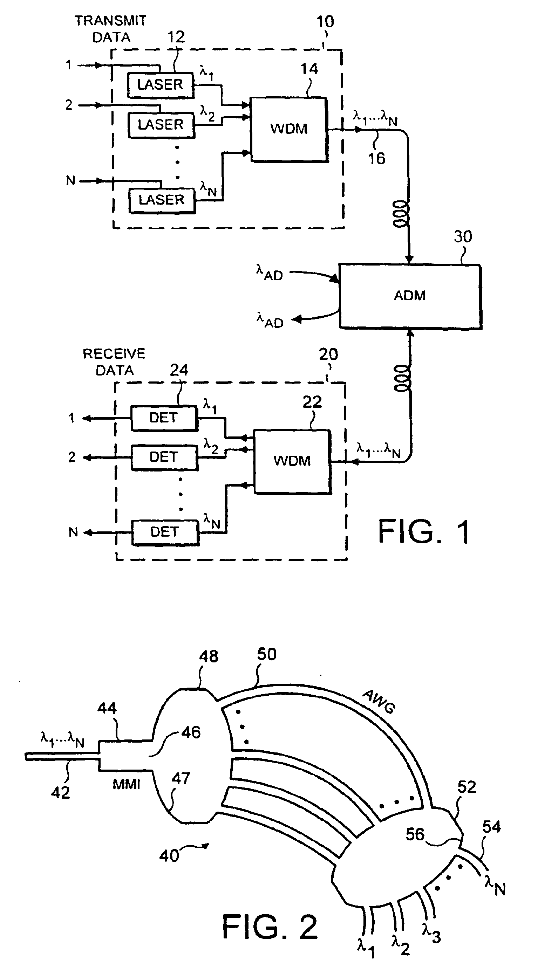

For these reasons. WDM has been proposed in which multiple (*N*) electronic data channels, as illustrated in Figure 1, enter a transmitter 10 and modulate separate optical emitters such as lasers 12 having N respective output carrier wavelengths $\lambda_1, \lambda_2, ...\lambda_N$. Conveniently, these wavelengths are arranged in a WDM wavelength comb having the neighbouring wavelengths $\lambda_1, \lambda_2, ...\lambda_N$ separated by a substantially constant inter-channel spacing given by

$$\Delta \lambda_S = \lambda_{i+1} - \lambda_i. \qquad (1)$$

An optical wavelength-division multiplexer 14 combines the optical signals of different wavelengths and outputs the combined signal on a single optical fibre 16. An optical receiver 20 includes a wavelength-division demultiplexer 22 which divides its received signals according to their optical wavelength to N optical detectors 24 according to the same wavelength allocation $\lambda_1, \lambda_2, ...\lambda_N$. In view of usually experienced reciprocity in passive systems, a wavelength-division demultiplexer is usually substantially identical to a wavelength-division multiplexer with a reversal of their inputs and outputs.

Additionally, an optical add/drop multiplexer (ADM) 30 may be interposed on the optical path 16 between the transmitter and the receiver 20. The optical add/drop multiplexer 30 removes from the optical channel on the fibre 16 one or more wavelength channels at wavelength $\lambda_{AD}$ and inserts back onto the fibre 16 an optical data signal perhaps containing different information but at the same optical carrier wavelength $\lambda_{AD}$. The ADM 30 is typically implemented with technology closely resembling the WDMs 14. 22. All-optical networks have been proposed in which a distributed networks having many nodes each including a transmitter 10 and receiver 20 are linked by a functionally passive network which routes the signals between the nodes according to their wavelengths. The routing elements in such an all-optical network require switching elements similar to the ADM 30.

In order to maximise or at least increase the transmission capacity of the optical fibre 16, the wavelength channels $\lambda_1, \lambda_2, ...\lambda_N$ should be placed as closely together as possible with a minimum channel spacing $\Delta\lambda_S$. In advanced systems, this inter-channel spacing $\Delta\lambda_S$ is 1 nm or less for a signal centred around 1300 or 1550nm, the preferred bands for silica fibre. Such closely spaced WDM networks are referred to as dense WDM networks (DWDM).

The network design described above may be subject to a problem arising from the fact that the operation of the transmitter 10. receiver 20 and intermediate node 30 are all referenced to the same set of WDM wavelengths $\lambda_1, \lambda_2, ...\lambda_N$. However each of the distributed elements must provide its own wavelength calibration. Due to environmental and ageing effects, the wavelength calibration settings at one element are likely to differ from those at another element. In view of the close spacing of the optical channels, any miscalibration between network elements is likely to produce inter-channel interference.

For an optimised optical system, the fibre 16, the WDMs 14, 22, and the ADM 30 are typically designed to be single-mode at least at their ports for the optical wavelengths being used. Although each of the lasers 12 is likely emitting light across an exceedingly narrow bandwidth, the single-mode response of the frequency sensitive elements 14, 22, 30 usually has a wavelength (frequency) characteristic that approximates to a gaussian distribution about the centre wavelength $\lambda_0$ of the channel $F(\lambda)=\exp(-(\lambda-\lambda_0)/\Delta\lambda_G)$. The value of the gaussian passband $\Delta\lambda_G$ can be fairly freely chosen for present day fabrication techniques. However, the value of the passband is subject to countervailing restraints. For dense WDM systems, the inter-channel spacing $\Delta\lambda_S$ is made as small as possible. The gaussian passband $\Delta\lambda_G$ must be substantially smaller than the inter-channel spacing $\Delta\lambda_S$ to avoid interference between channels. On the other hand, the frequency characteristics of the lasers 12 and other frequency-sensitive elements are subject to permanent or temporary variations. If the passband $\Delta\lambda_G$ is made too small, the peak is very narrow and small variations in wavelength away from the peak s wavelength $\lambda_0$ causes operation to shift to the sides of the peak, thereby degrading the signal strength. That is, for a strong signal the passband $\Delta\lambda_G$ should be made as large as possible to provide a broad top of the peak.

Amersfoort et al. have already recognised these problems, as disclosed in US Patent 5,629,992. These patents describe arrayed waveguide gratings, also called phasars, of the sort described by Hunsperger et al. in US Patent 4,773,063, and by Dragone in US Patents 5,412,744 and 5,488,680. In particular Amersfoort et al. describe a WDM phasar 40 exemplified in the schematic illustration of Figure 2. A single-mode waveguide 42 is coupled to one end of a multi-mode waveguide 44 of length chosen to produce a doubled image of the radiation from the single-mode waveguide 42 at a port 46 on one side wall 47 of a first free space region 48. The multi-mode waveguide 44 acts as a multi-mode interferometer (MMI). Multiple single-mode array waveguides 50 are coupled to ports on the other side of the first free space region 48 in the form of a star coupler. The array waveguides 50 are coupled on the other end to one side of a second free space region 52. The array waveguides 50 have lengths with predetermined length differences between them to act as an arrayed waveguide grating (AWG), operating similarly to a planar diffraction grating. Single-mode output waveguides 54 are coupled to the other side of the second free space region 50 along an output wall 56. The AWG causes the multi-wavelength signal from the input waveguide 42 to be wavelength demultiplexed on the respective output waveguides 54. Because of the reciprocal nature of the device, the roles of input and output can be reversed so that the same structure can be used as a wavelength multiplexer and as a wavelength demultiplexer. The placement and number of waveguides contemplated by Amersfoort et al. are wider than the example of a single input presented below.

The gaussian wavelength distribution described above for single-mode elements is related to the gaussian spatial distribution of intensity experienced at the outputs of single-mode fibres. However, the multi-mode waveguide 44, because it typically contains two closely spaced peaks at the port 46, produces a spatial output pattern into the first free space region 48 that is not gaussian but is much flatter at its peak than a corresponding gaussian distribution of the same passband. The wavelength characteristic of the free space between the multi-mode waveguide 44 and the rest of the phasar 40 is therefore also flattened. As a result, with the use of the multi-mode interference filter 44, it is possible to obtain a narrow wavelength response for the phasar but with smaller variations in response for small wavelength variations about the central values. However, the MMI solution of Amersfoort et al. suffers a power penalty of 2 to 3dB as the single-mode power is spread out over a wider area. Chen discloses a somewhat similar approach in US Patent 5.889.906. wherein he uses multi-mode sections, not in order to flatten the bandpass of the individual channels as Amersfoort et al. did, but in order to obtain better uniformity for the different individual channels.

Dragone in US Patent 5,412,744 broadens the passband of a standard phasar by having a Y-coupler interposed between the single-mode input waveguide 42 and two single-mode waveguides separately coupled into the free space region 48. The result is to spread the intensity for one mode across a larger area on the input wall of the free space region 48. This approach suffers a similar power penalty of 2 to 3dB.

Dragone in US Patent 5,488,680 suggests the advantage of cascading wavelength routing devices such as phasars. One configuration he develops includes a Mach-Zehnder interferometer (MZI), a 3dB cross coupler between the two output waveguides of the MZI, and a standard phasar having a first free space region receiving the two waveguides from the MZI on its input wall. The geometry is such that one output waveguide focuses radiation of one wavelength at the output of the phasar and the other output waveguide radiation of another wavelength there with about 0.9dB ripple for wavelengths in between. Thereby, the passband of the combination of the Mach-Zehnder and the phasar is flattened.

Thompson et al. disclose an alternative technique for passband flattening of a phasar in "An original low-loss and pass-band flattened $SiO_2$ on Si planar wavelength demultiplexer," *OFC '98 Technical Digest*, Optical Fibre Conference, 1988, February 22-27, San Jose, California, p. 77. Two phasars are arranged in series. The first phasar has a free spectral range equal to the channel spacing. The free spectral range is the frequency range over which the frequency characteristics are repeated. In most one-stage phasar designs, all N channel spacings fit within one free spectral range. While the Thompson design theoretically offers a lossless broadening, in practice phasars are difficult to build to achieve optimum performance.

Accordingly, it is desired to provide a phasar design which offers passband flattening with low loss in a simple design.

SUMMARY OF THE INVENTION

Various respective aspects and features of the invention are defined in the appended claims.

An aspect of the invention as defined in claim 1 involves a phasar which is an optical coupler, such as a wavelength multiplexer or demultiplexer: which includes an arrayed waveguide grating between two free space regions, particularly applicable to a wavelength-division multiplexing (WDM) communication system transmitting a plurality of wavelength-differentiated signals separated by a wavelength channel spacing. A Mach-Zehnder interferometer (MZI) receives an optical input signal, divides it into two parts and passes the parts through waveguides of differing lengths, thereby introducing a phase difference between the two parts dependent upon the wavelength. The MZI is designed with a spectral free range equal to the channel spacing so that the MZI presents the same optical characteristics for each of the WDM signals. The two parts of the MZI signal are input to a multi-mode interferometer (MMI) (which forms part of the MZI but for clarity is described separately) outputting to a first free space region. The MMI preferably has a length which is a half integral of the beat length of the two lowest order modes such that the lateral position of maximum intensity at the interface between the MMI and the free space region depends upon the phase difference of the signals from the MZI. The MZI inputs are laterally spaced on one side of the MMI so that the signal output from the MMI to the free space region has a lateral spatial optical dispersion matching the wall optical dispersion of the phasar. Thereby, the transmission characteristics of the phasar are flattened for each of the passbands of the phasar. Alternatively, such an arrangement can be disposed on the output side.

It is desired that such wavelength-dispersive elements have channel spacings which are as small as possible. However, the smaller the channel spacing the greater the problems caused by interference between neighbouring channels such as cross-talk. To overcome this problem, wavelength dispersive elements having a flat passband spectra are desired.

Often, a signal passing through a wavelength dispersive element may originate from a plurality of different transmitting lasers, with each laser being intended to transmit at a wavelength within an extremely narrow wavelength band. Errors in signal transmission can be caused due to drift of one or more lasers outside this narrow wavelength band, or even away from the centre of this wavelength band.

An attempt to address this problem was made in US 5,629,992. This patent proposes the use of a multi-mode interference filter which produces a multiple image of an input signal at one of its ends connected to the input of a frequency dispersive element. Embodiments of the present invention can provide an improvement on this device.

BRIEF DESCRIPTION OF THE DRAWINGS

Embodiments of the invention will now be described with reference to the accompanying drawings, throughout which like parts are referred to by like references, and in which:

Figure 1 is a schematic diagram of a wavelength-division multiplexing (WDM) optical fibre communication system;
Figure 2 is a schematic illustration of a prior art design for broadening the passband in a phasar by the use of a multi-mode interference filter;
Figure 3 is a schematic illustration of an embodiment of a passband-broadened phasar of an embodiment of the present invention;
Figure 4 is an exploded view of a portion of Figure 3;
Figures 5A through 5H are graphs showing the lateral displacement of an intensity peak at the output plane of the multi-mode interferometer as a function of the phase difference of the signals input to the multi-mode interferometer;
Figure 6 and 7 contain graphs illustrating the passband flattening achievable with the invention and compared to the prior art;
Figures 8 through 13 are schematic illustrations of alternative embodiments of the invention;
Figure 14 shows the waveguide pattern of an AWG multi/demultiplexer chip;
Figure 15 shows schematically the function of an AWG multi/demultiplexer:
Figure 16 shows a schematic perspective of an optical substrate;
Figure 17 shows schematically a multimode interference filter of the prior art;
Figure 18 shows schematically a device according to an embodiment of the invention;
Figure 19 schematically illustrates the profile of the waveguide mode at the input and output of a conventional MMI;
Figure 20 schematically illustrates the situation in which the connecting waveguide is tapered so that it broadens transversely towards the MMI;
Figure 21 schematically illustrates the situation where the MMI itself has a varying transverse width;
Figure 22 illustrates simulation results for the filter response of an MMI having parallel sides; and
Figure 23 schematically illustrates a similar plot for an MMI having a width tapering from 16 to 20um.

DETAILED DESCRIPTION OF THE PREFERRED EMBODIMENTS

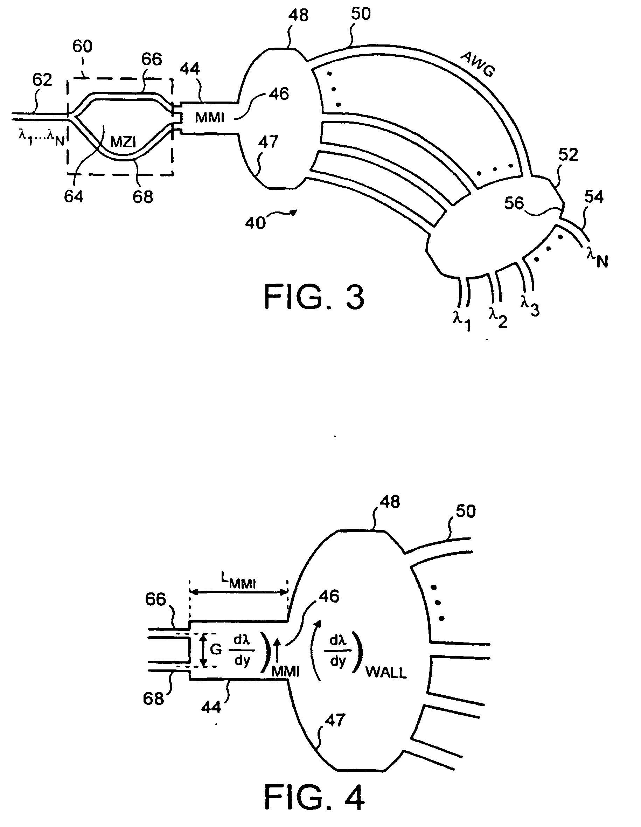

One embodiment of the invention is schematically illustrated in the optical circuit of Figure 3. The portion of the optical circuit close to the multi-mode interferometer 44 is shown in more detail in the exploded view of Figure 4. The optical circuit includes a Mach-Zehnder interferometer (MZI) 60 which produces a linear dispersion of a distributed wavelength signal that balances the dispersion of the phasar 40 around the wavelength of the centre channel of the multi-wavelength signal $\lambda_1$, $\lambda_2$, ...$\lambda_N$. The Mach-Zehnder interferometer 60 receives the multi-wavelength signal on a single-mode fibre 62 or other optical waveguide. A Y-coupler 64 or other type of 50:50 optical power splitter divides the signal to two single-mode waveguide arms 66, 68 of the MZI 60, preferably with equal intensities. The two arms 66, 68 have different physical lengths differing by $\Delta L$ so that a phase difference $\Delta\varphi$ arises between signals of equal wavelength $\lambda_i$ as they traverse the MZI 60. However, the phase difference depends upon the value of the wavelength, as given by Equation (1)

$$\Delta\phi = 2\pi\Delta L \frac{n_{eff}(\lambda_i)}{\lambda_i} \qquad (2)$$

where $n_{eff}(\lambda_c)$ is the effective optical index of the two waveguides 66, 68 at the central wavelength $\lambda_c$ of the WDM comb. It is assumed that the waveguides are of similar construction. However, an inspection of Equation (2) shows that the more relevant length is the optical length including the refractive index rather than the physical length. Techniques are well know for dynamically varying the refractive index in a waveguide by an electronic signal, for example, by a thermo-optic, electro-optic or piezo-electric effect, as described by Nishihara et al. in *Optical Integrated Circuits,* (McGraw-Hill, 1985, ISBN 0-07-046092-2). The MZI may be designed to operate in a higher order mode m in which there are extra multiples of $2\pi$ in the phase difference. The order is given by

$$m = \Delta L \frac{n_{eff}(\lambda_C)}{\lambda_C}\left(1 - \frac{\lambda_C}{n_{eff}(\lambda_C)}\frac{dn_{eff}(\lambda_C)}{d\lambda}\right) \qquad (3)$$

The free spectral range $\Delta\lambda_{FSR}$ of an optical device is the wavelength difference over which the spectral characteristics repeat, generally corresponding to the next higher multiple of the optical wavelength. At higher orders, the free spectral range becomes increasingly narrow. For the MZI 60 operating in a high-order mode, the free spectral range is given by

$$\Delta\lambda_{FSR} = \frac{\lambda_C}{m}. \qquad (4)$$

According to one aspect of the invention, the free spectral range $\Delta\lambda_{FSR}$ is made approximately equal to the inter-channel spacing $\Delta\lambda_S$ with the result that the MZI 60 is designed to operate in the high order mode given by

$$m = \frac{\lambda_C}{\Delta\lambda_S}. \qquad (5)$$

The equality need not be exact but $\Delta\lambda_{FSR}$ should be accurate within 0.25/N of the channel spacing $\Delta\lambda_s$, where N is the number of output channels For a channel spacing below 1 nm for infrared radiation of 1300 to 1550nm, the order m is above 1000. The result of such a design is that the spectral response of the MZI 60 is the same for each of the WDM wavelengths $\lambda_1, \lambda_2, ...\lambda_N$ although there may be significant variations for small wavelength variations about the central values of the WDM wavelengths. The waveguide arms 64, 68 operating with the free spectral range equal to the channel spacing are preferably designed such that signals precisely calibrated to each of the N WDM wavelengths $\lambda_1, \lambda_2, ...\lambda_N$ traverse the MZI 60 with zero phase difference $\Delta\varphi$. When the number N of output channels of the phasar is even, the design may be such that a 180o phase difference between the two arms 64, 68 is required.

The MZI waveguides 64, 64 have ends that approach each other as they near the MMI 44. However, their close approach does not extend over an appreciable distance, and the interaction length is much less the 3dB coupling length promoted by Dragone. As a result, the wavelength components enter the MMI 44 with equal intensity but with a phase difference varying with wavelength. Any unintended coupling during close approach can be partly eliminated by a slight reduction of the length of the MMI section 44.

As shown best in Figure 4, the two waveguide arms 66,68 are separately coupled into the multi-mode interference interferometer (MMI) 44 with a gap between them on one longitudinal end of the MMI 44. The gap is preferably measured by a separation G between the centres of the MZI waveguide 66, 68 as they enter the MMI 44. The MZI waveguides 66, 68 have ends that approach each other as they near the MMI 44. However, their close approach does not extend over an appreciable distance, and the interaction length is much less the 3dB coupling length promoted by Dragone. Although the MZI 60 and MMI 44 are closely coupled without a clear interface between them, it can be considered that the signals at a given wavelength propagating on the two MZI waveguides 66. 68 enter the MMI 44 with equal intensity but with a phase difference varying with wavelength of the two signals.

The length $L_{MMI}$ of the MMI 44 is chosen to be approximately half the beat length $L_\pi$ between the two lowest order modes, that is,

$$L_{MMI} = \frac{L_\pi}{2},\qquad\qquad(6)$$

where the beat length is represented by

$$L_\pi = \frac{\lambda_C}{2(n_0 - n_1)} \approx \frac{4 n_C W}{3 \lambda_C},\qquad\qquad(7)$$

where $n_0$ and $n_1$ are the effective optical indices for the fundamental and next higher-order modes supported in the MMI 44. The 2-D engineering approximation for the beat length on the right side of Equation (7) depends upon *W.* which is the width of the MMI-section, and $n_C$, which is the effective index of the core region of the waveguide. It is assumed that only two non-degenerate modes are supported, but the invention is not so limited. A wide MMI supports many modes and results in nearly perfect imaging using either paired or general interference, as is described by Soldano et al. in "Optical multi-mode interference devices based on self-imaging principles and applications", *IEEE Journal Lightwave Technology,* vol. 13, no. 4, pp. 615-627, 1995. However perfect imaging is not particularly desired in the present invention. Instead, it is desired to achieve linear dispersion of a gaussian peak and low crosstalk, which is better realised with smaller MMI sections supporting only two lateral modes, and consequently introducing some excess loss of approximately 0.3 dB.

For the preferred technology of silica on silicon, with Ge-doped silica waveguides with core-to-cladding index-difference of 0.0075 and $7\mu$m x $7\mu$m cores, the beat length $L_\pi$ equals approximately $750\mu$m and thus $L_{MMI}$ approximately equals $350\mu$m including some reduction approximately accounting for the waveguide cross coupling, where the MMI width is taken to be approximately $20\mu$m. It is possible that the MMI length be increased by multiples of the beat length so that acceptable lengths are approximately ½, 3/2, 5/2, etc. of the beat length, but it must be remembered that the addition of a beat length to the length of the MMI changes the sign of the dispersion.

The optical signals from the two inputs to the MMI 44 can be considered to propagate independently. However, the two radiation signals interfere according to the phase difference between them. At half the beat length, the intensity distribution at the port 46 between the MMI 44 and the first free space region 48 has a spatial dispersion across the port 46 that varies almost linearly with the phase difference $\Delta\varphi$ for a restricted range of phase differences, for example, between -90o and 90o.

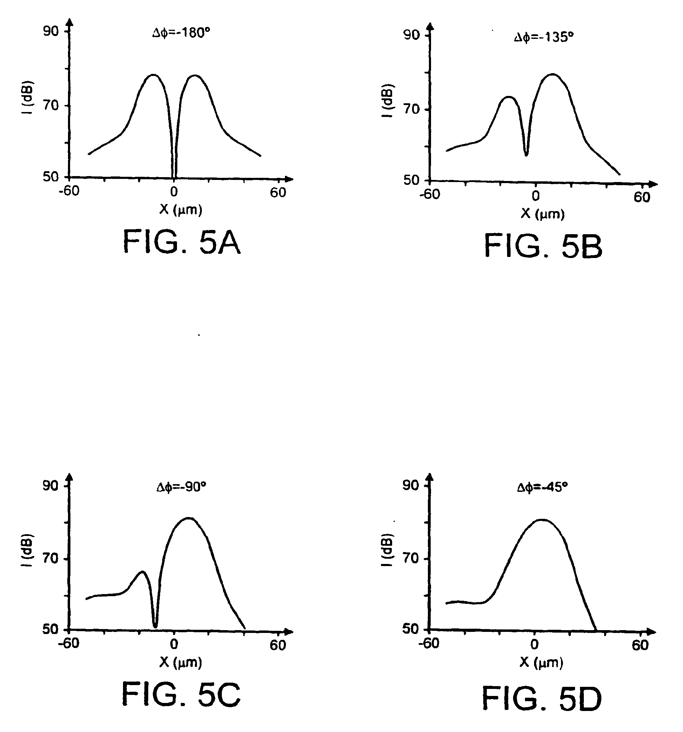

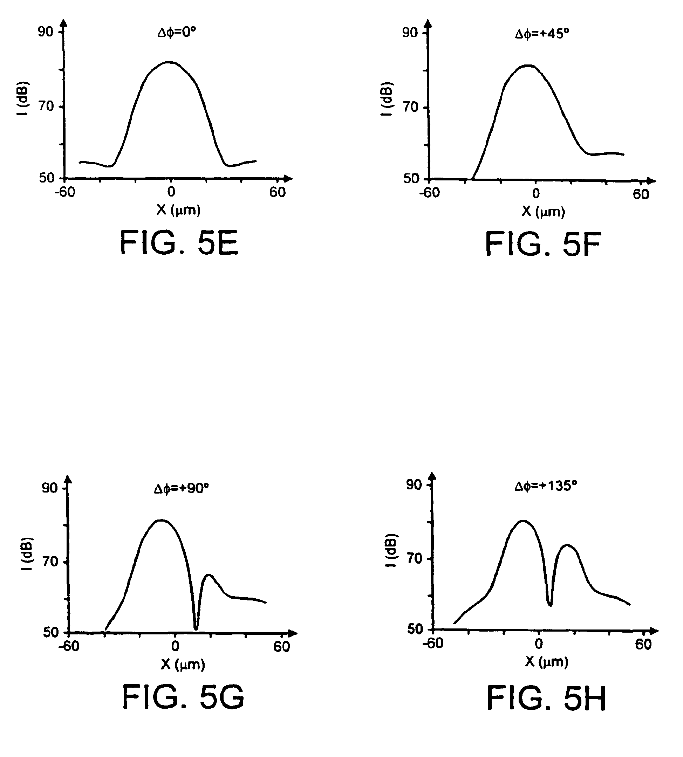

A calculation has been performed based upon an MMI having a width $W_{MMI}$ of $20\mu$m and a half-beat length of $350\mu$m compared to a single-mode waveguide width of $7\mu$m and where the separation G between the input waveguides is $10\mu$m, The optical intensity / measured in dB was calculated over a width of =$60\mu$m from the centre of the MMI for phase differences $\Delta\varphi$ over the range of -180o to +135o. The results are graphed in Figures 5A through 5H. Considering only Figures 5C through 5G. the position of the intensity peak varied over about $10\mu$m as the phase difference $\Delta\varphi$ varied between -90o and 90o. Furthermore, the peak position varies approximately linearly with the phase difference. Because the phase difference varies with the wavelength, as is evident from Equation (2), the variation in peak position may be represented by a lateral MMI dispersion d$\lambda$/dy)$_{MMI}$, the sign of which depends on whether the upper or lower branch 66. 68 of the MZI 60 is longer, resulting in a positive or negative sign respectively.

In very general terms for a simple embodiment of the invention, the NIMI 44 supports a fundamental mode with one lateral peak in the centre of the MMI output plane 46 and a first harmonic mode that has two lateral peaks at that position. The two MZI waveguides 66. 68 are approximately aligned with respective ones of the two harmonic peaks. At the half-beat length, a zero phase difference produces a strong fundamental peak with small harmonic peaks; at positive or negative phase differences, one or the other of the harmonic peaks dominate more, and the centre of the peak has a lateral displacement with respect to the centre.

For phase differences of magnitude greater than approximately 90º, the linear relation between lateral position and wavelength breaks down. These large phase differences correspond to wavelengths between the WDM comb. The precise value of the onset of the non-correspondence between position and wavelength is not crucial to the operation of the invention.

As shown in the exploded schematic view of Figure 3, the phasar 40 is designed so that the first free space region 48 has a spatial dispersion $d\lambda/dy)_{WALL}$ along the wall including the port 46 between the MMI 44 and the first free space region 48. If hypothetical waveguides carrying signals of distinctive wavelengths were coupled into the first free space region 48 at locations corresponding to wavelengths calculated to include the spatial dispersion $d\lambda/dy)_{WALL}$, all the different wavelengths would be focused at a single spot on the output wall 56 of the second free space region 52 of Figure 3. Another way of viewing the optical dispersion is to consider a multi-wavelength signal entering the first free space region at a fixed position on its wall 47 and determining the wavelength dispersion of that signal on the output wall 56 of the second free space region 52. The lateral dispersion of the MMI 44 is designed to compensate for the wavelength dispersion on the output wall 56 so that a broadened passband is presented to a single point on the output wall 56. Assuming that the phasar 40 is designed to have generally symmetric input and output geometries, the spatial dispersion is what enables a multi-wavelength signal input on the waveguide 42 to be wavelength demultiplexed into the output waveguides 54, and similarly for multiplexing in the opposite direction, but this separation is between different wavelengths of the WDM comb. The compensation of the invention is useful when limited to a limited passband of the separate wavelengths.

According to the invention, the phasar and MMI are designed such that the phasar spatial dispersion and the MMI lateral dispersion are equal

$$\frac{d\lambda}{dy}\bigg)_{MMI} = \frac{d\lambda}{dy}\bigg)_{WALL}. \tag{7}$$

Of course, it is important that the sign of the dispersion of the MMI and the phasar are the same at the wall 46. The sign of the dispersion of the phasar $d\lambda/dy)_{WALL}$ depends on whether the length increments of the branches 50 is positive or negative. An implementation where the dispersion is of correct sign is shown in Figure 3. It is further appreciated that the equality need not be exact and a 25% variation between the two would still produce an advantageous result. Because of the equality of the inter-channel spacing and the spectral free range, the MMI lateral dispersion can be represented by

$$\frac{\Delta\lambda_S}{2G} = \frac{d\lambda}{dy}\bigg)_{WALL}. \tag{8}$$

That is, half a channel spacing is spread across the separation between the MZI waveguides at their interface to the MMI. In the usual symmetric phasar design, the spatial dispersion is equal on the input and output walls. If the waveguide spacing on the output wall is $d$, then the input waveguide separation $G$ should be approximately half this value. For a more conservative design utilising less than half of the inter-channel phase spacing, $G$ may be somewhat less than half of $d$, for example. 0.4, while still maintaining equality of the two spatial dispersions.

As mentioned above, each of the precise WDM wavelengths $\lambda_1, \lambda_2, ...\lambda_N$ should enter the MMI 44 with zero phase difference $\Delta\varphi$ (or 180º for even values of $N$), and thus each will have a peak laterally positioned in the middle of port 56 between the free space region 48 and the MMI 44 of half beat length. All these precisely registered signals will be demultiplexed according to wavelength to the corresponding output waveguide 54 of Figure 3. Furthermore, because of the matching of dispersion, signals entering the MMI 44 from the MZI 60 with phase differences $\Delta\varphi$ between $\pm90º$ will also be accurately conveyed across the phasar to be demultiplexed on the proper output waveguide 54. This phase window of 180º corresponds to half the channel spacing $\Delta\lambda_S$. The result is a spectral response that is approximately flat for half the channel spacing and thus much flatter than the typical gaussian response exhibited by phasars.

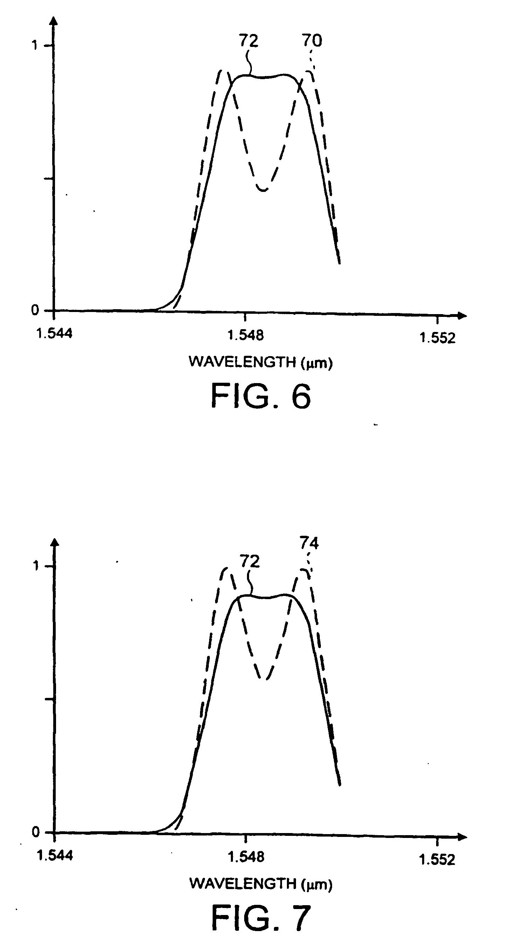

An example of the passband flattening achievable with the invention is presented in the graphs of Figure 6, which are based upon calculations. When the MMI is designed with a large width of $30\mu$m and the waveguide separations $G$ is $10\mu$m, the spectral response of the phasar is represented by the double-peaked curve 70 of Figure 6. A far better spectral response is obtained when the MMI is designed with a width of $18.5\mu$m with the same gap $G$ of $10\mu$m so that the MMI supports only two modes. The resulting spectral response is represented by the flattened curve 72. This response should be compared to the response represented by a double-peak curve 74, shown in Figure 7, for the Dragone phasar using a 3dB coupler between the MZI outputs rather than an MMI. Each of the two peaks corresponds to the generally gaussian response of the Dragone phasar. The peaks of Dragone are doubled because the MZI introduces the signals at two different spots along phasar wall. If the MZI were not used, the spectral response would correspond to one of the peaks.

The phasar represented in Figure 3 is a linear, reciprocal device. Accordingly, it can be operated either as a demultiplexer as described or a multiplexer in which different wavelength signals are separately input on the respective corresponding waveguides 54 and a single wavelength multiplexed signal is output on the waveguide 62. By a similar extension, respective MZIs and MMIs can be placed on each of the $N$ output waveguides rather than a single pair on the one input waveguide. Also, it is well known that a demultiplexer such as that illustrated in Figure 3 can be generalised to an optical splitter having more than one input waveguide 62. In this case, each of the input waveguides has its own MZI and MMI. with the MMIs positioned at precisely chosen locations on the input wall of the first free space region.

The geometry of the interface between the MZI 60 and MMI 44 illustrated in Figure 3 is intended to be only suggestive. It is preferred that adjacent the MMI 44, the two MZI waveguides 66, 68 symmetrically approach the MMI 44 from different lateral sides with equally curving paths.

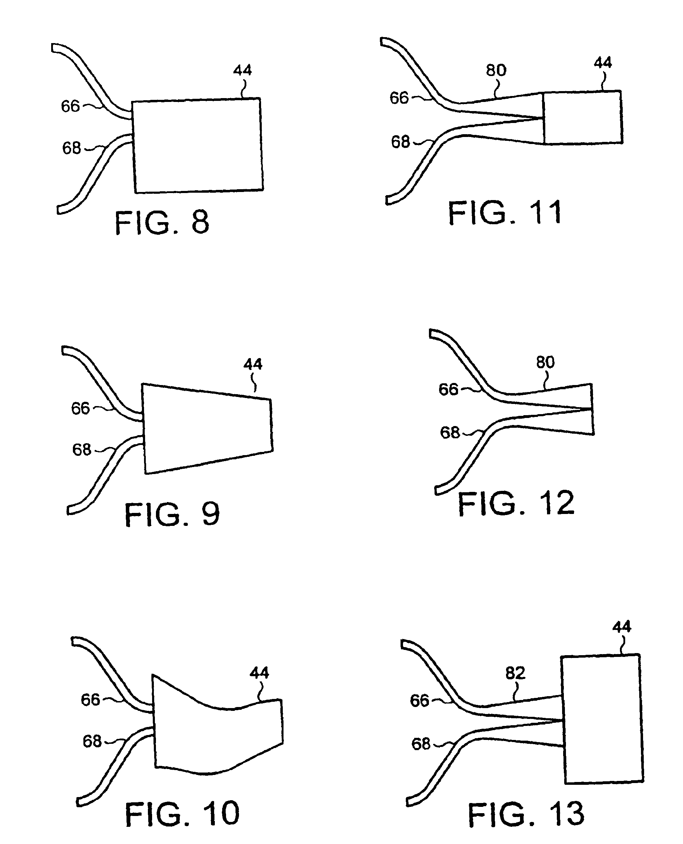

The designs and calculations presented above have assumed a simple geometry of a rectangular MMI joined directly to symmetrically placed MZI waveguides. Other designs are represented in Figure 8 through 13. In Figure 8, the MZI waveguides 66, 68 are asymmetrically placed on the input side of the MMI 44. In Figure 9, the MMI 44 is tapered. As a result, the radiation field input from the MZI waveguides 66. 68 is compressed to the output side. The MMI lateral dispersion then needs to be determined at the output side, not the input side. The outward tapering allows a relaxed design for the interface between the MZI and MMI. In Figure 10. the MMI 44 is both tapered and angled. Different configurations of multi-mode sections with comparable performances, for example, butterfly and angled MMIs, are described by Besse et al. in "New 1x2 multi-mode interference couplers with free selection of power splitting ratios," ECOC 94 and by Besse in Swiss Patent Application No. 03 310/93-3,4. Nov. 1993. Similar multi-mode sections are also shown in Figures 2B to 2H of U.S. Patent 5,889,906 to Chen et al. where multi-mode sections are used for different purposes.

In Figure 11, taper sections 80 couple the MZI waveguides 66,68 to the MMI 44. The taper sections 80 taper from single mode on the MZI side to double mode on the MMI side. This allows a more efficient coupling of the single-mode field distribution from the MZI branches into the MMI.

In Figure 12, the taper sections 80 couple directly into the first free space region 48 of Figure 3. Each tapered section itself acts as the required multi-mode section.

The embodiment of Figure 13 is close to that of Figures 2 and 3 except that the waveguides 66, 68 have slightly tapered sections 82 that are adiabatically changed in width at the entrance of the MMI section 44.

Embodiments of the invention thus provides a flattened passband in a phasar, thus enabling a multi-wavelength communication system to be more tolerant of wavelength drift and other forms of miscalibration between different nodes in a network. The flattening is obtained by a slight increase in the complexity of the waveguide structure of the phasar, without the need for additional materials or controls.

Further embodiments of the invention will now be described.

An Array Waveguide Grating is a planar structure comprising a number of arrayed channel waveguides which together act like a diffraction grating in a spectrometer.

An AWG multiplexer is a device which combines optical signals of different wavelengths; conversely, an AWG demultiplexer splits a multiplexed signal into a plurality of signals. An AWG multiplexer typically comprises two focusing slab regions, often called couplers, connected to either end of an arrayed waveguide grating, a plurality of input waveguides connected to one of the slab regions, and one or more output waveguide(s) connected to the other slab region. An AWG demultiplexer typically comprises two focusing slab regions connected to either end of an arrayed waveguide grating, one or more input waveguide(s) connected to one of the slab regions, and a plurality of output waveguides connected to the other slab region.

Since AWGs work in both directions, a multiplexer can often be used as a demultiplexer by using it in the reverse direction. The most flexible device is obtained by employing multiple input and output waveguides. The function of the device then depends on the nature of the signal, or signals, input to the device, that is whether the input is a multiplexed signal of many wavelengths or a plurality of single wavelength signals.

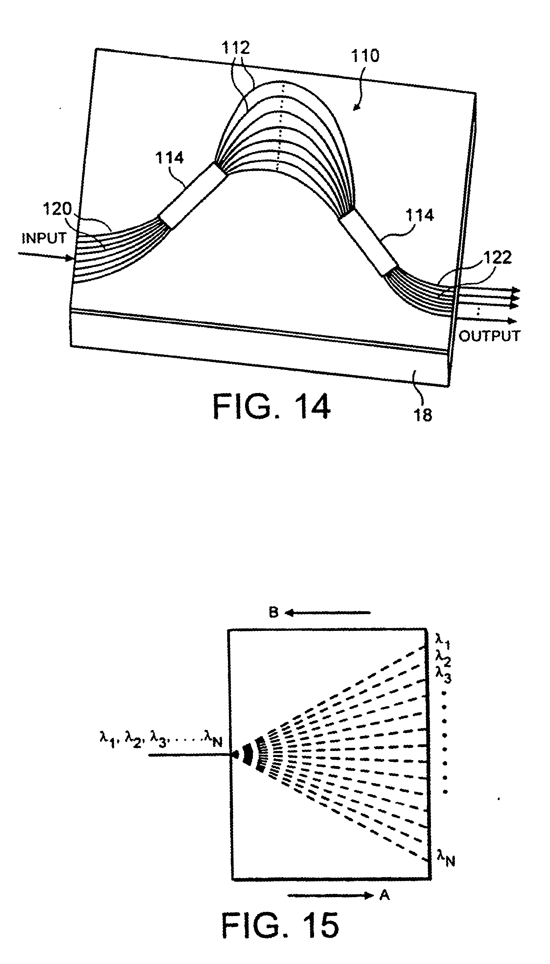

A typical AWG mux/demux, as shown in Figure 14, comprises two focusing slab regions 114, hereafter called couplers, connected to either end of an arrayed waveguide grating 110. The grating 110 consists of an array of channel waveguides 112, only some of which are shown. Input multiple WDM signals are dispersed and focused simultaneously to each prescribed output waveguide 122.

In the arrangement shown in Figure 14, a substrate 118 has formed on it first and second couplers 114, a plurality of array waveguides 112, a plurality of input/output waveguides 120 connected to the first coupler, and a plurality of input/output waveguides 122 connected to the second coupler. The array waveguides 112 and/or input/output waveguides 120, 122 are preferably arranged generally side-by-side.

Each of the waveguides 112, 120, 122, has a core 115 with a cladding material 116 at least on either side of it.

The couplers 114 are preferably star couplers, which are well known in the art, and which have curved input and output surfaces. The curve of the input/output of the slabs enhances focusing of the signals, but also enables neighbouring waveguides to be angled away from each other in the vicinity of the coupler, thereby reducing the cross talk.

The waveguide array device preferably comprises an array 110 of waveguides 112 having different lengths, to provide an array of different path lengths to an input signal. Preferably the path length difference between neighbouring waveguides of the array is a constant, L, where $L=m\lambda_c/n_c$ and $\lambda_c$ is the central wavelength of the grating, $n_c$ is the effective refractive index of the channel waveguides and m is an integer number. Light entering the launch end of the array undergoes differential phase shifting in each channel, proportional to its length, and emerges from the output end of the array to form a free-space diffraction pattern. The angular position of the peak of the diffraction pattern is related to the relative phase shift between adjacent waveguide channels. The grating acts as a phase grating of order m. Single mode channel waveguides are preferably used to enable exact phase control in the grating.

The arrangement works as follows. Light from an input waveguide expands as a 2D diverging wave inside the first slab and excites the input of the arrayed waveguide channels which start along a curve, in this example an arc of a circle with radius r, around the slab input. After travelling through the arrayed waveguides, the light at the end face of the grating, arranged on a circle with radius r, is radiated as a 2D wave into the second slab region as a converging wavefront and converges to a focal point at the slab exit where the outgoing waveguide is located.

The signal path length difference in the array 110 results in a wavelength dependent tilt of the radiated spherical wave, converging to a shifted focal point. The pitch of the channel waveguides at the grating exit is typically around 17 $\mu$m.

This process is best understood by considering its analogy to a conventional diffraction grating. It the channels in the array were all of the same length then the situation would be identical to a conventional diffraction grating and the central intensity peak of the diffraction pattern would lie on the normal to the end face of the array. Varying the wavelength of light launched into the array would cause the side-lobes of the diffraction pattern to move in a transverse direction but the central, dominant, peak would remain stationary. In order to improve the efficiency of diffraction gratings of the type used in spectroscopy it is usual to introduce a slight angle into each of the ruled lines on the grating. This process, known as 'blazing', causes the bulk of the light in the central peak to shift to one of the diffracted orders, resulting in a large increase of useful signal. The process of blazing is mimicked in the waveguide array by introducing a linear phase shift between each waveguide channel. This causes the zero-order diffraction peak to be at a large angle to the axis of the array but the bulk of the forward travelling light occurs in a useful diffraction order.

As the wavelength is varied, the angular position of the diffracted beam changes enabling the wavelength to be either measured or, in the case of a de-multiplexer, to be isolated.

The wavelength resolution of the arrayed grating, $\Delta\lambda$, turns out to have the same expression as that for a conventional diffraction grating:

$$\Delta\lambda = \frac{\lambda}{Nm}$$

where:

N    is the number of channel waveguides in the array,
m    is the diffraction order.

Thus for a high resolution a large number of channels and a large diffraction order are required.

Each of the waveguides of the device is preferably a single moded, or substantially single-moded waveguide to reduce phase errors as much as possible.

Referring to the device shown schematically in Figure 15, for a signal transmitted in the direction of arrow 'A', the device comprises a single input waveguide and multiple output waveguides. The device functions as a demultiplexer, splitting an input signal of many wavelengths into a plurality of output signals, each of a single wavelength. The same grating could function in reverse as a multiplexer, as shown by arrow 'B'.

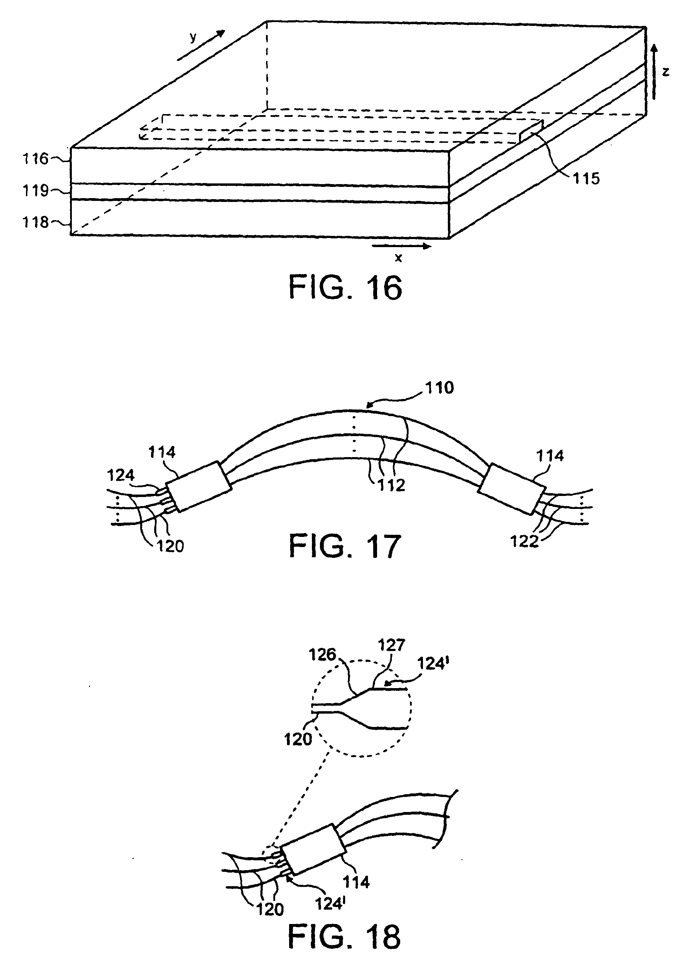

Figure 16 shows schematically how an optical waveguide is formed on a substrate. A silica waveguide is defined to consist of the following regions:

- a substrate 118 of silicon, $SiO_2$ (silica) or the like;
- a (possibly doped) silica buffer layer 119 deposited by thermal oxidation or by flame hydrolysis deposition or another method, and of course not required on a silica substrate;
- a (possibly doped) silica cladding layer 116 deposited by flame hydrolysis (FHD) or plasma enhanced chemical vapour deposition; and
- one or more (possibly doped) cores 115 surrounded by the cladding and buffer regions. The cores may be formed by laying down a layer of core glass by FHD and a consolidation step, then photolithographically masking and etching to form the core paths. The cladding and any other subsequent layers can then be established by FHD.

For the purpose of characterising an optical waveguide, the following parameters are defined:

| | |
|---|---|
| $n_{substrate}$ | substrate 118 refractive index |
| $n_{buffer}$ | buffer 119 refractive index |
| $n_{clad}$ | cladding 116 refractive index |
| $n_{core}$ | core 115 refractive index |
| $t_{substrate}$ | substrate 118 thickness |
| $t_{buffer}$ | buffer 119 thickness |
| $t_{clad}$ | cladding 116 thickness |
| $t_{core}$ | core 115 thickness |
| $W_{core}$ | core 115 width |

A waveguide fabricated according to embodiments of the invention is defined to possess the following characteristics:

**Refractive Index (RI)**

$n_{core} > n_{clad}, n_{buffer}$
$n_{substrate} >> n_{buffer}, n_{clad}, n_{core}$ (for Si substrate)
$n_{substrate} < n_{core}$ (for $SiO_2$ substrate)

**Dimensions**

$t_{substrate} >> t_{clad} + t_{buffer}$
$t_{clad}, t_{buffer} > t_{core}$

Embodiments of the present invention can be used in the context of the AWG mux/demux shown in Figure 14, and described earlier. Preferably, such an arrangement is provided as a planar silica-on-silicon integrated chip produced by FHD. However, other substrates may also be used. The present invention also finds application in many other optical devices.

Figure 17 discloses a multimode interference filter 124 employed at the junction of an input waveguide 120 with a coupler 114 which couples light input from the waveguide to a wavelength dispersive element, namely an arrayed waveguide grating 110.

As shown in Figure 18, the device is improved by the addition of a taper section 126 which acts as a mode shaper/transformer between the input waveguide 120 and the multimode region 127. It has been found that the use of such a taper section improves the sharpness of the cut-off of the transmission function of the waveguide. The taper section increases in width towards the multimode portion 126. This is preferably (though not exclusively) an adiabatic taper, the taper being arranged to adiabatically transmit the light signals, such that the mode(s) of the signals passing along the waveguides do not couple with higher order modes, until the multimoded section is reached. The taper dimensions are typically about 500 microns long and about 6 to 16 microns wide. Of course, as shown in the example of Figure 11 above, the waveguide taper need not be to the same width as the MMI.

As can be seen in Figure 18, the input waveguide and the multimode position have the same width at the connection there between, the device being arrayed so as to adiabatically transmit light signals.

The device of the present invention finds numerous applications, particularly in switches, routers, multiplexers and waveguide array devices.

The system of the preferred embodiment thus has a transmission characteristic which is improved both by the use of an MMI filter, as well as by the provision of an adiabatic taper section.

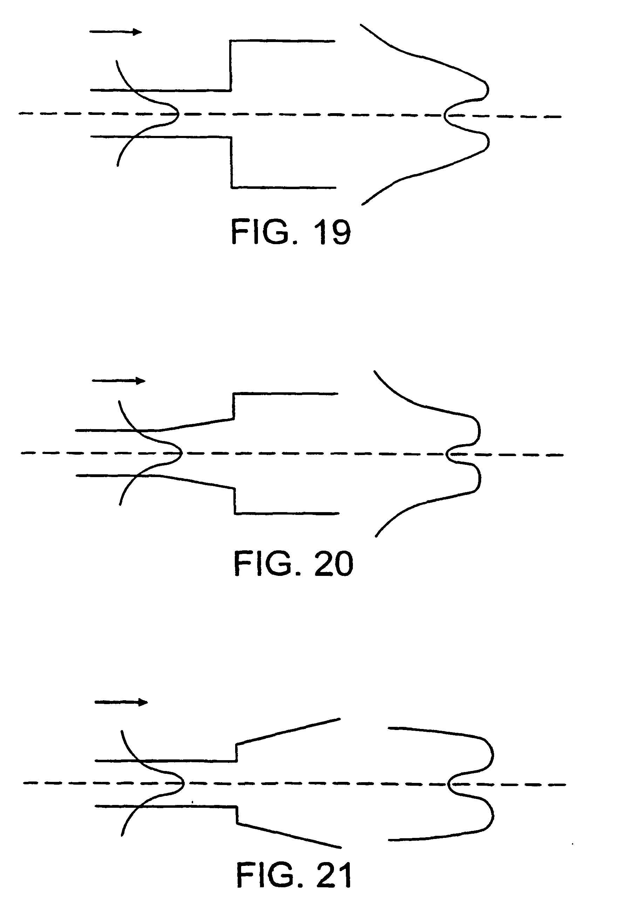

Figure 19 schematically illustrates the profile of the waveguide mode at the input and output of a conventional MMI filter, that is to say a filter having an abrupt width transition between the connecting waveguide and the region forming the MMI itself. Where the MMI forms part of the input to an AWG, the mode shape at the output of the MMI has a correspondence with the wavelength response of each channel of the AWG.

Figure 20 schematically illustrates the situation in which the connecting waveguide is tapered so that it broadens transversely towards the MMI. In this case, the two peaks in the output of the MMI are flattened, giving a flattened channel wavelength response when used in a device such as an AWG.

Figure 21 schematically illustrates the situation where the MMI itself has a varying transverse width, tapering so that it broadens transversely in a direction away from the connecting waveguide. In this case, only a few modes are excited at the input end of the MMI. This has the effect of steepening the outer edges of the mode shape at the MMI output and so the filter function.

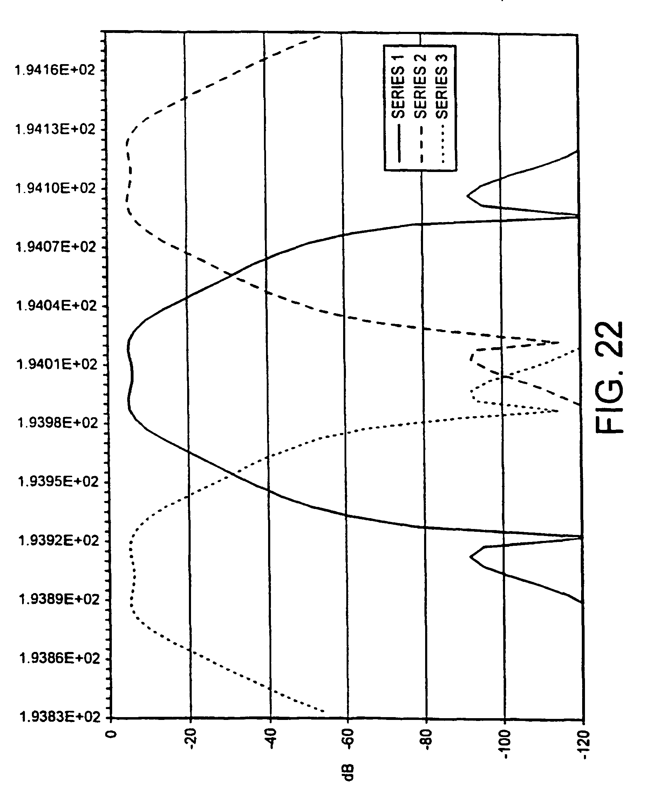

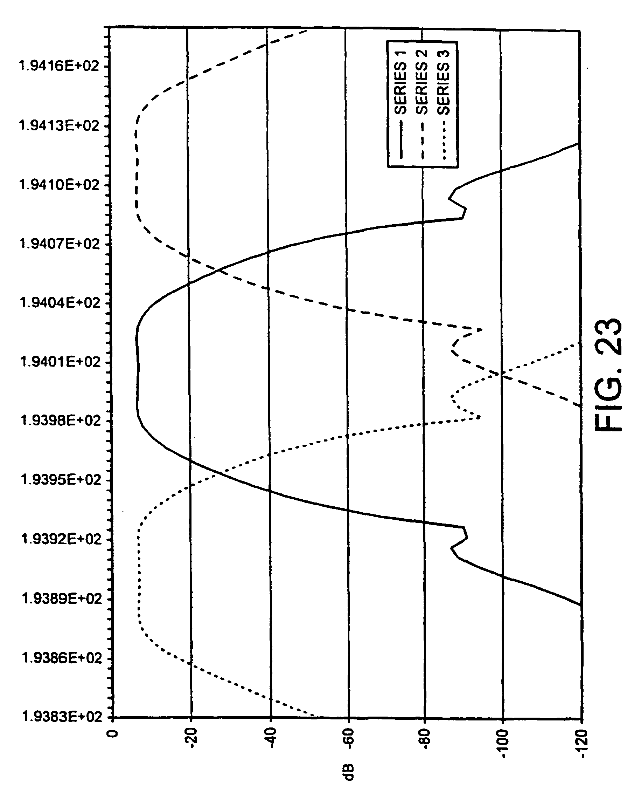

These results have been confirmed by simulation. Figure 22 illustrates simulation results for the filter response of an MMI having parallel sides (i.e. a constant width along its length), a width of 16um and a length of 183um. As a comparison, Figure 23 schematically illustrates a similar plot for an MMI having a width tapering from 16 to 20um and a length of 183um. The vertical scales are in dB and the horizontal scales in arbitrary wavelength units, identical between the two Figures. It can be seen that the tapered MMI has a squarer, flatter filter profile.

**Claims**

1. A passband-flattened phasar comprising a phasar comprising two free space regions (48,52) coupled by a plurality of arrayed waveguides (50) and having at least one optical waveguide (62) disposed on an output side of a first one of the free space regions and a plurality of optical waveguides (54) disposed on an output side of a second one of the free space regions there being disposed between one of the optical waveguides and one of the free space regions a structure comprising:

   a Mach-Zehnder interferometer (60,44) comprising:

   a first portion coupled to said one waveguide (62) on one side and having two ports on a second side thereof and a second portion comprising:

   a multi-mode waveguide (44) supporting more than one laterally defined mode and having a first end coupled to said two ports of said first portion of said Mach-Zehnder interferometer at at least two positions with a separation therebetween and a second end coupled to said one free space region, wherein said separation provides a lateral dispersion of said multi-mode waveguide (44) substantially equal to a lateral dispersion of said two free space regions (48,58) and said arrayed waveguides (50); **characterised in that** the cross-section of said multi-mode waveguide (44) has a constant refractive index in the guiding part of said waveguide.

2. The phasar of Claim 1 wherein said multi-mode waveguide (44) has a length approximately equal to a multiple plus a half of a beat length between a fundamental mode and a next higher mode supported by said multi-mode waveguide.

3. The phasar of Claim 1, wherein said first portion of said Mach-Zehnder interferometer (60,44) comprises an optical coupler coupling an optical signal on a single-port side to two optical signals on a two-port side.

4. The phasar of Claim 3, wherein said optical coupler is a Y-coupler (64).

5. The phasar of Claim 1, wherein said first portion of said Mach-Zehnder interferometer comprises two single-mode waveguides (66,68) having different optical lengths.

6. The phasar of Claim 5, comprising respective tapered waveguides having first single-mode ends connected to respective ones of said single-mode waveguides (66,68) of said first portion of said Mach-Zehnder interferometer and second multi-mode ends coupled to said multi-mode waveguide (44).

7. The phasar of Claim 5, further comprising at least one electrically controlled means for varying a refractive index associated with said single-mode waveguides (66,68) of said first portion of said Mach-Zehnder interferometer.

8. The passband-flattened phasar of Claim 1, wherein no cross coupler couples optical signals of said two ports to 3dB or more between said first portion of said Mach-Zehnder interferometer and said multi-mode waveguide.

9. The phasar of Claim 1, wherein said phasar is incorporated into a wavelength-division multiplexing system for transmitting a plurality of wavelengths in a comb of wavelengths separated by a channel spacing and wherein said Mach-Zehnder interferometer has a spectral free range approximately equal to said channel spacing.

**Patentansprüche**

1. Phasar mit flachem Bandpaß, der einen Phasar aufweist, der zwei freie Raumbereiche (48, 52) aufweist, die mit einer Mehrzahl von angeordneten Wellenleitern (50) gekoppelt sind, und mit zumindest einem optischen Wellenleiter (62), der an einer Ausgangsseite eines ersten der freien Raumbereiche-angeordnet ist, und mit einer Mehrzahl von optischen Wellenleitern (54), die an einer Ausgangsseite eines zweiten freien Raumbereichs angeordnet sind, wobei zwischen einem der optischen Wellenleiter und einem der freien Raumbereiche eine Struktur angeordnet ist, die aufweist:

   ein Mach-Zehnder-Interferometer (60, 44), das aufweist:

   einen ersten Abschnitt, der mit dem einen Wellenleiter (62) auf einer Seite verbunden ist, und mit zwei Anschlüssen auf einer zweiten Seite hiervon und einem zweiten Abschnitt, der aufweist:

   einen Multimodenwellenleiter (44), der mehr als eine lateral festgelegte Mode trägt, und mit einem ersten Ende, das mit den zwei Anschlüssen des ersten Abschnitts des Mach-Zehnder-Interferometers an zumindest zwei Positionen mit einer Trennung dazwischen verbunden ist, und mit einem zweiten Ende, das mit dem einen freien Raumbereich verbunden ist, wobei die Trennung eine laterale Dispersion des Multimodenwellenleiters (44) bereitstellt, die im wesentlichen gleich der lateralen Dispersion der zwei freien Raumbereiche (48, 58) und der angeordneten Wellenleiter (50) ist, **dadurch gekennzeichnet, daß** der Querschnitt des Multimodenwellenleiters (44) einen konstanten Brechungsindex im leitenden Teil des Wellenleiters hat.

2. Phasar nach Anspruch 1, bei dem der Multimodenwellenleiter (44) eine Länge hat, die näherungsweise gleich einem Mehrfachen und einer halben einer Schwebungslänge zwischen einer Fundamentalmode und einer nächst höheren Mode, die von dem Multimodenwellenleiter unterstützt wird, ist.

3. Phasar nach Anspruch 1, wobei der erste Abschnitt des Mach-Zehnder-Interferometers (60, 44) einen optischen Koppler aufweist, der ein optisches Signal auf eine Einzelanschlußseite mit zwei optischen Signalen auf einer Zwei-Anschluß-Seite koppelt.

4. Phasar nach Anspruch 3, wobei der optische Koppler ein Y-Koppler (64) ist.

5. Phasar nach Anspruch 1, bei dem der erste Abschnitt des Mach-Zehnder-Interferometers zwei Einzelmodenwellenleiter (66, 68) mit unterschiedlichen optischen Längen aufweist.

6. Phasar nach Anspruch 5, der entsprechende spitz zulaufende Wellenleiter mit ersten Einzelmodusenden, die mit den entsprechenden der Einzelmodenwellenleiter (66, 68) des ersten Abschnitts des Mach-Zehnder-Interferometers verbunden sind, und mit zweiten Multimodenenden, die mit dem Multimodenwellenleiter (44) verbunden sind, aufweist.

7. Phasar nach Anspruch 5, der weiterhin aufweist zumindest eine elektrisch gesteuerte Einrichtung für das Variieren eines Brechungsindex, der mit den Einzelmoduswellenleitem (66, 68) des ersten Abschnitts des Mach-Zehnder-Interferometers verknüpft ist.

**8.** Phasar mit abgeflachtem Bandpaß nach Anspruch 1, bei dem kein Kreuzkoppler die optischen Signale der zwei Anschlüsse auf 3 dB oder mehr zwischen dem ersten Abschnitt des Mach-Zehnder-Interferometers und dem Multimodenwellenleiter koppelt.

**9.** Phasar nach Anspruch 1, wobei der Phasar in einem Wellenlängenmultiplexsystem aufgenommen ist für das Übertragen einer Mehrzahl von Wellenlängen in einem Wellenlängenkamm, die durch einen Kanalabstand getrennt sind, und wobei das Mach-Zehnder-Interferometer einen freien spektralen Bereich hat, der näherungsweise gleich dem Kanalabstand ist.

**Revendications**

**1.** Phasar à bande passante aplanie comprenant un phasar constitué de deux régions d'espace libre (48, 52) couplées par une pluralité de guides d'ondes en réseau (50) et ayant au moins un guide d'ondes optique (62) disposé sur un côté extérieur d'une première des régions d'espace libre et une pluralité de guides d'ondes optiques (54) disposés sur un côté extérieur d'une seconde des régions d'espace libre, une structure étant disposée entre l'un des guides d'ondes optiques et l'une des régions d'espace libre, celle-ci comprenant :

un interféromètre de Mach-Zehnder (60, 44), comprenant :

une première partie couplée audit un guide d'ondes (62) d'un côté et ayant deux accès d'un second côté de celle-ci et une seconde partie comprenant :

un guide d'ondes multimode (44) acceptant plus d'un mode défini latéralement et ayant une première extrémité couplée auxdits deux accès de ladite première partie dudit interféromètre de Mach-Zehnder en au moins deux positions mutuellement séparées et une seconde extrémité couplée à ladite une région d'espace libre, dans lequel ladite séparation produit une dispersion latérale dudit guide d'ondes multimode (44) sensiblement égale à une dispersion latérale desdites deux régions d'espace libre (48, 58) et desdits guides d'ondes groupés (50) ; **caractérisé en ce que** la section transversale dudit guide d'ondes multimode (44) a un indice de réfraction constant dans la partie de guidage dudit guide d'ondes.

**2.** Phasar selon la revendication 1, dans lequel ledit guide d'ondes multimode (44) a une longueur approximativement égale à un multiple plus une moitié d'une longueur de battement entre un mode fondamental et un mode immédiatement supérieur accepté par ledit guide d'ondes multimode.

**3.** Phasar selon la revendication 1, dans lequel ladite première partie dudit interféromètre de Mach-Zehnder (60, 44) comprend un coupleur optique couplant un signal optique sur un côté à un seul accès à deux signaux optiques sur un côté à deux accès.

**4.** Phasar selon la revendication 3, dans lequel ledit coupleur optique est un coupleur en Y (64).

**5.** Phasar selon la revendication 1, dans lequel ladite première partie dudit interféromètre de Mach-Zehnder comprend deux guides d'ondes monomodes (66, 68) ayant des longueurs optiques différentes.

**6.** Phasar selon la revendication 5, comprenant des guides d'ondes biseautés respectifs ayant des premières extrémités monomodes connectées à certains, respectifs, desdits guides d'ondes monomodes (66, 68) de ladite première partie dudit interféromètre de Mach-Zehnder et des secondes extrémités multimodes couplées audit guide d'ondes multimode (44).

**7.** Phasar selon la revendication 5, comprenant en outre au moins un moyen commandé électriquement pour faire varier un indice de réfraction associé auxdits guides d'ondes monomodes (66, 68) de ladite première partie dudit interféromètre de Mach-Zehnder.

**8.** Phasar à bande passante aplanie selon la revendication 1, dans lequel aucun coupleur croisé ne couple des signaux optiques desdits deux accès à 3 dB ou plus entre ladite première partie dudit interféromètre de Mach-Zehnder et ledit guide d'onde multimode.

**9.** Phasar selon la revendication 1, dans lequel ledit phasar est intégré à un système de multiplexage par répartition en longueur d'onde pour transmettre une pluralité de longueurs d'onde dans un peigne de longueurs d'onde séparées par un espacement de canal et dans lequel ledit interféromètre de Mach-Zehnder a une gamme spectrale libre approximativement égale audit espacement de canal.

TRANSMIT DATA

FIG. 1

FIG. 2

FIG. 3

FIG. 4

FIG. 5A

FIG. 5B

FIG. 5C

FIG. 5D

FIG. 5E

FIG. 5F

FIG. 5G

FIG. 5H

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

EP 1 226 461 B1